# EUROPÄISCHE PATENTSCHRIFT

(11) **EP 3 194 747 B1**
(45) Veröffentlichungstag und Bekanntmachung des Hinweises auf die Patenterteilung: **13.06.2018**
(21) Anmeldenummer: 15756388.3
(22) Anmeldetag: 25.08.2015
(51) Int. Cl.: F02B 37/16, F16K 31/06, H01F 7/126, H01F 7/127, H01F 7/128

(54) **ELEKTROMAGNETVENTIL FÜR EINEN VERBRENNUNGSMOTOR**
ELECTROMAGNETIC VALVE FOR AN INTERNAL COMBUSTION ENGINE
SOUPAPE ÉLECTROMAGNÉTIQUE POUR MOTEUR À COMBUSTION INTERNE

(30) Priorität: 19.09.2014 DE 102014113566
(43) Veröffentlichungstag der Anmeldung: 26.07.2017
(73) Patentinhaber: Pierburg GmbH, 41460 Neuss (DE)
(72) Erfinder: LENK, Martin, 41470 Neuss (DE); PAUL, Oliver, 45896 Gelsenkirchen (DE)
(74) Vertreter: Patentanwälte ter Smitten Eberlein-Van Hoof Rütten Partnerschaftsgesellschaft mbB
(86) Internationale Anmeldenummer: PCT/EP2015/069419
(87) Internationale Veröffentlichungsnummer: WO 2016/041743

(56) Entgegenhaltungen:
- EP-A1- 1 941 138
- EP-A1- 2 605 254
- WO-A1-02/091404
- WO-A1-2014/068765

## Beschreibung

Die Erfindung betrifft ein Elektromagnetventil für einen Verbrennungsmotor mit einem Gehäuse, einem elektromagnetischen Aktor, der im Gehäuse angeordnet ist, einem Regelkörper, der axial aus dem Gehäuse ragt und mit dem Anker des Aktors verbunden und bewegbar ist und mit dem Anker eine Bewegungseinheit bildet sowie Mitteln, die eine axiale, von einem Kern des Aktors weg weisende Bewegung der Bewegungseinheit axial begrenzen.

Derartige Elektromagnetventile werden in Verbrennungsmotoren für die verschiedensten Anwendungen benötigt. Als Beispiel eines solchen Ventils lässt sich ein elektromagnetisch betätigtes Schubumluftventil zur Rezirkulation von verdichtetem Frischgas gegebenenfalls mit rezirkuliertem Abgas von der Druckseite eines Verdichters eines Turboladers zurück zur Saugseite des Verdichters nennen. Die Verbindung zwischen der Druckseite und der Saugseite des Verdichters durch eine Bypassleitung wird für den Übergang von einer hohen Last in den Schubbetrieb der Verbrennungskraftmaschine benötigt, um eine hohe Förderung der Ladedruckpumpe gegen eine geschlossene Drosselklappe und den daraus entstehenden Pumpeffekt sowie ein zu starkes plötzliches Absenken der Turbodrehzahl mit den Folgen thermodynamischer Probleme zu verhindern.

Der Ventilsitz ist dabei üblicherweise in der Bypassleitung ausgebildet, die am Turboladegehäuse montiert ist. Dies bedeutet, dass der Regelkörper durch die entsprechende Öffnung der Bypassleitung auf den Ventilsitz geführt wird und daraufhin der Aktor am Gehäuse des Bypasskanals verschraubt wird. Bei diesen Ventilen ist jedoch darauf zu achten, dass die Baugruppe bestehend aus Anker und Regelkörper nicht zuvor aus dem Aktor hinausfällt, was die Montage und den Transport erheblich erschwert. Entsprechend ist es wünschenswert, wenn das Ventil vollständig vormontiert in das Strömungsgehäuse eingesteckt und dort befestigt werden kann.

So ist aus der DE 197 49 641 A1 ein Elektromagnetventil bekannt, bei dem zum Transport des Ventils über den Regelkörper, bestehend aus Hülsen und Dichtungsringen eine zusätzliche Schutzkappe geschoben wird. Vor dem Einbau muss diese allerdings wieder entfernt werden, so dass bei der Montage weiterhin darauf geachtet werden muss, dass die Einzelteile der Regeleinheit korrekt zueinander positioniert bleiben.

Aus der DE 10 2004 044 439 B4 ist ein Schubumluftventil bekannt, bei dem am Regelkörper eine nach außen weisende Dichtung angeordnet ist. Diese liegt auf einem Gehäuseteil auf, so dass der Regelkörper mit dem Anker nicht aus dem Gehäuse gleiten kann. Dies bedeutet jedoch, dass die Dichtung einer mechanischen Belastung ausgesetzt ist, was zu Schäden am Dichtring und daraus folgend im Betrieb zu Undichtigkeiten führen kann.

Ein ähnliches Problem besteht auch bei einem Schubumluftventil, wie es in der EP 1 941 138 B1 offenbart wird. Hier ist am Verschlusskörper im zum Aktor weisenden Bereich eine ringförmige Erweiterung vorgesehen, welche vor der Montage des Ventils gegen einen im Querschnitt V-förmigen Dichtrung anliegt. Auch bei dieser Ausführung wird somit ein Herausfallen der Baugruppe bestehend aus dem Anker und dem Regelkörper durch die Dichtung verhindert, welche somit beschädigt werden kann.

Des Weiteren ist aus der EP 2 605 254 A1 ein Elektromagnet bekannt, dessen Anker entweder innerhalb eines Rohres bewegbar ist, welches einen konisch zulaufenden Abschnitt aufweist, der in eine Ausnehmung des Ankers greift, oder dessen Anker in einem Spulenträger angeordnet ist, der einen axialen Erweiterungsabschnitt aufweist, an dem Haken ausgebildet sind, die in die Ausnehmung des Ankers greifen. Dies vergrößert den axialen Bauraum, ändert die magnetischen Kräfte am Anker und verschlechtert dessen Führung,

Auch die WO02/091404 A1 offenbart eine elektromagnetische Stellvorrichtung, bei dem ein Vorsprung des Spulenträgers in eine Ausnehmung des Ankers greift, um diesen im Steller zu sichern.

Es stellt sich daher die Aufgabe, ein Elektromagnetventil zur Verfügung zu stellen, bei dem beim Transport und Einbau des Ventils in eine Öffnung eines Kanals ein Herausfallen der Anker-Regelkörper-Baugruppe zuverlässig verhindert wird, ohne dass Schäden an einer den Regelkörper im geschlossenen Zustand abdichtenden Dichtung zu befürchten sind. Auch sollen hierfür keine zusätzlichen Bauteile verwendet werden müssen.

Diese Aufgaben werden durch ein Elektromagnetventil für einen Verbrennungsmotor mit den Merkmalen des Hauptanspruchs 1 gelöst.

Dadurch, dass die Mittel zur Begrenzung der axialen Bewegung der Bewegungseinheit durch mindestens einen am Gehäuse angeordneten Haken gebildet sind, der in eine Ausnehmung der Bewegungseinheit greift, die sich vom vom Kern abgewandten axialen Ende des Ankers am Regelkörper erstreckt, wird eine Belastung der Dichtung zwischen dem Gehäuse und dem Regelkörper beim Transport ausgeschlossen. Auch werden keine zusätzlich zu montierenden Bauteile benötigt. Der Anker kann somit, wie üblich, als im Wesentlichen zylindrischer Körper hergestellt werden, an dem der Haken während des Transports von unten anliegt. Eine entsprechende Ausnehmung am Regelkörper selbst auszuführen, ist konstruktiv einfach.

Vorzugsweise ist der mindestens eine Haken einstückig mit einem Gehäuseteil des Gehäuses ausgebildet. Entsprechend kann der Haken in einem Verfahrensschritt gleichzeitig mit dem Gehäuseteil hergestellt werden, so dass zusätzliche Montage- oder Herstellschritte entfallen.

Vorteilhafterweise weist das Gehäuse ein Aktorgehäuseteil und ein Anschlussgehäuseteil auf, wobei der Haken am Anschlussgehäuseteil ausgebildet ist. Dieses Anschlussgehäuseteil dient der Aufnahme des Regelkörpers im Betrieb. Es handelt sich um ein Bauteil, was durch einfaches Kunststoffspritzen hergestellt werden kann.

Dabei erstreckt sich der Haken vorzugsweise vom radial inneren Rand des Anschlussgehäuseteils in dem Bereich, der vom Anker durchdrungen wird. Diese Position eignet sich in besonderem Maße, da der Haken nah an der sich bewegenden Einheit angeordnet ist und somit klein ausgeführt werden kann.

In einer besonders bevorzugten Ausführungsform ist der Abstand eines Endes des Hakens zur Mittelachse des Ankers kleiner als der Radius des Ankers. Daraus folgt, dass der Haken hinter den Anker greifen kann und somit am stabilen Anker seine Haltekraft ausübt, so dass Schäden an anderen Bauteilen zuverlässig vermieden werden.

Des Weiteren ist es vorteilhaft, wenn der axiale Abstand des Hakens vom Kern mindestens so groß ist wie der Abstand des vom Kern abgewandten axialen Endes des Ankers in der Position, in der der Regelkörper auf einem Ventilsitz aufliegt. Auf diese Weise wird sichergestellt, dass der Haken nicht den Verschluss des zu regelnden Kanals behindert, sondern erst am Anker anliegt, wenn eine größere Axialbewegung vorhanden ist als beim Betrieb des Ventils.

In einer weiteren bevorzugten Ausbildung der Erfindung ist die axiale Höhe der Ausnehmung mindestens so groß wie der Verstellweg des Ankers summiert mit der axialen Ausdehnung des Hakens und dem Abstand des Hakens vom Anker in der auf dem Ventilsitz aufliegenden Position des Regelkörpers. Dies hat zur Folge, dass eine vollständige freie Bewegung des Ankers und des Regelkörpers im Betrieb möglich ist.

In einer hierzu weiterführenden Ausbildung weist der Regelkörper einen inneren Hohlkörper und einen daran befestigten im Wesentlichen zylindrischen Hohlkörper auf und die Ausnehmung ist an einem axialen Abschnitt des inneren Hohlkörpers ausgebildet. Somit kann der seitlich am Regelkörper mündende Kanal durch den vollständig zylindrisch ausgeführten Hohlkörper verschlossen werden, während der Haken im inneren nicht durchströmten Bereich angeordnet werden kann.

Vorzugsweise sind drei gleichmäßig über den Umfang verteilte Haken am Gehäuse ausgebildet. Somit besteht eine allseitige Umfassung des Ankers, so dass ein Verkanten des Ankers oder des Regelkörpers durch einseitige Belastung ausgeschlossen wird.

Vorzugsweise sind die drei Haken und deren Halteelemente gleichmäßig über den Umfang verteilt in Zwischenräumen von ringsegmentförmigen Vorsprüngen, die als Führungsabschnitt einer Feder dienen, angeordnet. Auf diese Weise ist eine sichere Führung der Feder und Transportsicherung hergestellt, wobei das zu verwendende Material beim Spritzen reduziert wird.

Besonders bevorzugt ist es, wenn der mindestens eine Haken am axialen Ende eines Führungsabschnitts für eine Feder ausgebildet ist. Dieser Führungsabschnitt ist beispielswiese von einer Schraubenfeder umgeben, die entsprechend gegen Kippen oder radiales Verschieben gesichert ist.

Es wird somit ein Elektromagnetventil für einen Verbrennungsmotor geschaffen, welches eine zuverlässige Transportsicherung des Ankers und des Regelkörpers aufweist, ohne dass Dichtungen des Ventils belastet werden. Zusätzlich wird im Betrieb eine freie Beweglichkeit dieser Einheit gewährleistet. Zusätzliche Montageschritte oder Herstellkosten werden vermieden.

Ein Ausführungsbeispiel eines erfindungsgemäßen Elektromagnetventils wird am Beispiel eines Schubumluftventils für einen Verdichter eines Verbrennungsmotors beschrieben und ist in den Figuren dargestellt.

Die Figur zeigt eine Seitenansicht eines erfindungsgemäßen Schubumluftventils in geschnittener Darstellung.

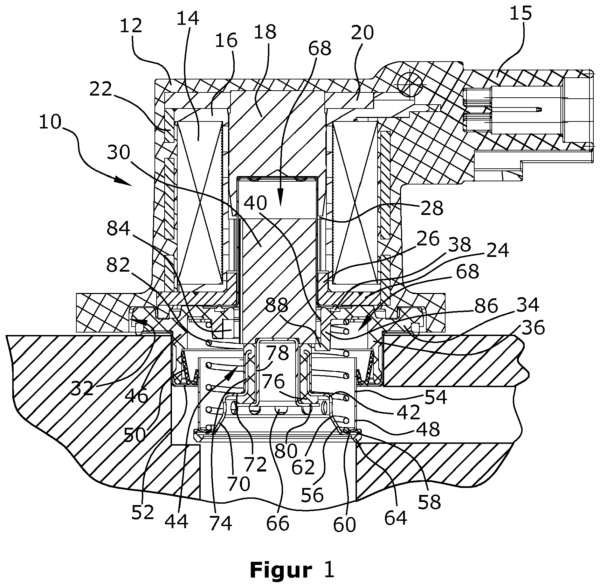

Das in der Figur 1 dargestellte, erfindungsgemäße Schubumluftventil besteht aus einem elektromagnetischen Aktor 10 mit einem Aktorgehäuseteil 12, in dem eine Spule 14, die über einen Stecker 15 mit Strom versorgt werden kann, auf einem Spulenträger 16 angeordnet ist. Im radial inneren Bereich des Spulenträgers 16 ist ein magnetisierbarer Kern 18 befestigt, dessen axiales Ende über den Spulenträger 16 hinausragt, wobei der Kern 18 an diesem axialen Ende von einem Rückschlussblech 20 umgeben ist, welches in Verbindung mit einem die Spule 14 umgebenden Joch 22 steht. Am zum Kern 18 entgegengesetzten Ende des Spulenträgers 16 befindet sich ein weiteres Rückschlussblech 24, welches im radial äußeren Bereich mit dem Joch 22 in Kontakt steht und einen inneren axialen Erstreckungsabschnitt 26 aufweist, der sich in den Spulenträger 16 erstreckt.

Im radial Inneren dieses axialen Erstreckungsabschnitts 26 ist eine Führungshülse 28 angeordnet, über die ein Anker 30 in seiner Bewegung axial geführt wird.

Das Aktorgehäuseteil 12 weist an seinem zum Kern 18 entgegengesetzten axialen Ende eine kreisförmige Ausnehmung 32 auf, in der ein Grundkörper 34 eines Anschlussgehäuseteils 36 aufgenommen wird, welches am Aktorgehäuseteil 12 unter Zwischenlage von Dichtungen 38 und gegen das Rückschlussblech 24 anliegt und mit dem Aktorgehäuseteil das Gehäuse des Schubumluftventils bildet.

In diesem Grundkörper 34 ist eine zentrale Öffnung 40 ausgebildet, durch die der Anker 30 beziehungsweise die aus dem Anker 30 und einem Regelkörper 42 bestehende Bewegungseinheit 44 des Ventils ragt. Im radial weiter außen liegenden Bereich erstreckt sich vom Grundkörper 34 des Anschlussgehäuseteils 36 in axialer Richtung eine ringförmige Gehäusewand 46, die eine zylindrische Außenfläche 48 des Regelkörpers 42 umgibt. Gegen diese Gehäusewand 46 liegt ein Schenkel einer im Querschnitt V-förmigen Dichtung 50 an, deren anderer Schenkel gegen die zylindrische Außenfläche 48 anliegt, so dass der Spalt zwischen der Gehäusewand 46 und dem Regelkörper 42 abgedichtet wird. Diese Dichtung 50 liegt auf einem Stützring 52 auf, der am Anschlussgehäuseteil 36 befestigt ist und von der zum Aktor 10 entgegengesetzten Seite gegen das Anschlussgehäuseteil 36 geschoben wird, so dass die Gehäusewand 46 radial vom Stützring 52 umgeben wird und axial durch diesen begrenzt wird.

Der Regelkörper 42 besteht aus einem ersten Hohlkörper 54 und einem zweiten Hohlkörper 56, der radial im inneren des ersten Hohlkörpers 54 angeordnet ist. Der erste Hohlkörper 54 weist die über den Umfang geschlossene zylindrische Außenfläche 48 auf, an deren vom Anker 30 weg weisenden Ende eine ringförmige Platte 58 ausgebildet ist, die sich radial nach innen erstreckt. Der zweite Hohlkörper 56 weist eine radial äußere ringförmige Platte 60 auf, die mittels Schweißen an der ringförmigen Platte 58 befestigt ist und von deren Innenumfang aus sich eine Mantelfläche 62 in den inneren Bereich des ersten Hohlkörpers 54 erstreckt. Im radial äußeren Bereich der ringförmigen Platte 60 des zweiten Hohlkörpers 56 ist ein Dichtring 64 angespritzt, dessen wirksamer Durchmesser zur Auflage auf einem Ventilsitz eines angeschlossenen Strömungsgehäuses im Wesentlichen dem Durchmesser der zylindrischen Mantelfläche 48 des ersten Regelkörpers 42 entspricht. In der Mantelfläche 54 des zweiten Hohlkörpers 44 sind Öffnungen 66 ausgebildet, über die ein Einlass des Strömungsgehäuses mit einem Gehäuseinnenraum 68 des Schubumluftventils fluidisch stetig verbunden ist, der durch den ersten Hohlkörper 54, das Anschlussgehäuseteil 36 und die Führungshülse 28 begrenzt ist, so dass die Querschnittsfläche, auf die der Druck im Gehäuseinnenraum 68 in Schließrichtung des Schubumluftventils wirkt, gleich oder geringfügig größer als die Querschnittsfläche des Regelkörpers 42 ist, auf die der Druck einlassseitig in Öffnungsrichtung des Schubumluftventils wirkt.

Der zweite, innere Hohlkörper 56 erstreckt sich zunächst vom Innenumfang der Platte 60 aus zylindrisch in Richtung des Ankers 30. In diesem axialen Abschnitt 70 befinden sich auch die Öffnungen 66. Im weiteren Verlauf ist am Hohlkörper 56 ein Absatz 72 ausgebildet, von dem aus sich der Hohlkörper 56 mit verringertem Durchmesser axial weiter erstreckt. Dieser zylindrische Abschnitt 74 des zweiten Hohlkörpers 56 weist also einen geringeren Durchmesser auf als der Anker 30. Im Bereich dieses Abschnitts 74 ist der Hohlkörpers 56 mit einem Elastomer 76 umspritzt, welches gegen den Anker 30 anliegt. Um den Regelkörper 42 am Anker 30 zu befestigen, wird ein Verbindungselement 78 verwendet, welches am axialen Ende des Ankers 30 durch Schweißen befestigt ist und im Wesentlichen radial innerhalb des Elastomers 76 angeordnet ist. An der zum Anker 30 entgegengesetzten Seite weist das Verbindungselement 78 eine radiale Erweiterung 80 auf, die axial gegen das Elastomer 76 anliegt, dessen axiales Ende gegen den Absatz 72 anliegt, so dass der zweite Hohlkörper 56 am Anker 30 befestigt ist.

Um des Weiteren sicher zu stellen, dass bei Nichtbestromung der Spule 14 der Regelkörper 42 in seinen auf dem Ventilsitz aufliegenden Zustand gestellt wird, ist im Innern des ersten Hohlkörpers 54 eine Schraubenfeder 82 angeordnet, die gegen die Platte 58 des ersten Hohlkörpers 54 gespannt aufliegt und deren entgegengesetztes axiales Ende gegen den Grundkörper 34 des Anschlussgehäuseteils 36 anliegt. Diese Schraubenfeder 82 wird durch einen sich in Richtung des Regelkörpers 42 axial erstreckenden Führungsabschnitt 84 in Form von drei ringgsegmentförmigen Vorsprüngen die gleichmäßig über dne Umfang verteilt sind, und die die zentrale Öffnung 40 des Anschlussgehäuseteils 36 umgeben, radial in ihrer Position gehalten. Hierzu weist der Führungsabschnitt 84 einen Außendurchmesser auf, der geringfügig kleiner ist als der Innendurchmesser der Schraubenfeder 82.

Erfindungsgemäß erstrecken sich jeweils in den Zwischenräumen des Führungsabschnitts 84 axial vom Grundkörper 34 drei Halteelemente 86, an deren Ende jeweils ein Haken 88 ausgebildet ist, der sich in Richtung des zylindrischen Abschnitts 74 erstreckt. Dieser Abschnitt 74 bildet im Sinne der Erfindung eine Ausnehmung 76 im Vergleich zur radialen Erstreckung des Ankers 30, in die der Haken 88 greift. Das radial innere Ende des Hakens 88 weist entsprechend einen geringeren Abstand zur Mittelachse des Ankers 30 auf als der Außenumfang des Ankers 30. Daraus folgt, dass die axiale Bewegung des Ankers 30 durch den Haken 88 begrenzt wird, da der Anker 30 mit seinem vom Kern 18 abgewandten Ende bei fortgesetzter axialer, vom Kern 18 weg weisender Bewegung, gegen den Haken 88 anschlägt. Somit ist die Bewegungseinheit 44 gegen Herausfallen bei der Montage oder beim Transport zuverlässig gesichert. Um gleichzeitig sicher zu stellen, dass die Bewegung der Bewegungseinheit 44 im eingebauten Zustand nicht beschränkt wird, wird der Abstand zwischen dem axialen Ende des Ankers 30 und dem Absatz 72 des zweiten Hohlkörpers so gewählt, dass er mindestens so groß ist wie der Verstellweg des Ankers 30 summiert mit der axialen Ausdehnung des Hakens 88 und dem Abstand des Hakens 88 vom Anker 30 in der auf dem Ventilsitz aufliegenden Position des Regelkörpers 42. Des Weiteren wird die Länge des Halteelementes 86 so gewählt, dass der Haken 88 einen kurzen Abstand zum axialen Ende des Ankers 30 in der auf dem Ventilsitz aufliegenden Position des Regelkörpers 42 aufweist, also dass der axiale Abstand des Hakens 88 vom Kern 18 mindestens so groß ist wie der Abstand des vom Kern 18 abgewandten axialen Endes des Ankers 30 in der Position, in der der Regelkörper 42 auf dem Ventilsitz aufliegt.

Entsprechend besteht sowohl bei der Montage als auch beim Transport eine zuverlässige Sicherung der Bewegungseinheit 44, während beim Schalten der Bewegungseinheit 44 im Betrieb der Verstellweg frei durchfahrbar ist. Hierzu sind keine zusätzlichen Verfahrensschritte oder Bauteile notwendig.

Es sollte deutlich sein, dass der Schutzbereich der vorliegenden Erfindung nicht auf das beschriebene Ausführungsbeispiel begrenzt ist. Insbesondere kann die Ausnehmung auch an einer anderen Stelle des Ankers oder des Regelkörpers ausgebildet werden. Auch der Haken kann entsprechend an anderen Postionen des Gehäuses ausgebildet oder angebracht werden. Auch ist es denkbar, die Ausnehmung lediglich als Schlitz am Regelkörper auszubilden oder eine beliebige Anzahl an Haken vorzusehen, um ein Verkanten des Ankers zu verhindern.

## Patentansprüche

1. Elektromagnetventil für einen Verbrennungsmotor mit einem Gehäuse (12, 36),
einem elektromagnetischen Aktor (10), der im Gehäuse (12, 36) angeordnet ist,
einem Regelkörper (42), der axial aus dem Gehäuse (12, 36) ragt und mit dem Anker (30) des Aktors (10) verbunden und bewegbar ist und mit dem Anker (30) eine Bewegungseinheit (44) bildet, Mitteln, die eine axiale, von einem Kern (18) des Aktors (10) weg weisende Bewegung der Bewegungseinheit (44) axial begrenzen,
**dadurch gekennzeichnet, dass**
die Mittel zur Begrenzung der axialen Bewegung der Bewegungseinheit (44) durch mindestens einen am Gehäuse (12, 36) angeordneten Haken (88) gebildet sind, der in eine radiale Ausnehmung (76) der Bewegungseinheit (44) greift, die sich vom vom Kern (18) abgewandten axialen Ende des Ankers (30) am Regelkörper (42) erstreckt.

2. Elektromagnetventil für einen Verbrennungsmotor nach Anspruch 1,
**dadurch gekennzeichnet, dass**
der mindestens eine Haken (88) einstückig mit einem Gehäuseteil (36) des Gehäuses (12, 36) ausgebildet ist.

3. Elektromagnetventil für einen Verbrennungsmotor nach einem der Ansprüche 1 oder 2,
**dadurch gekennzeichnet, dass**
das Gehäuse (12, 36) ein Aktorgehäuseteil (12) und ein Anschlussgehäuseteil (36) aufweist, wobei der Haken (88) am Anschlussgehäuseteil (36) ausgebildet ist.

4. Elektromagnetventil für einen Verbrennungsmotor nach Anspruch 3,
**dadurch gekennzeichnet, dass**
der Haken (88) sich vom radial inneren Rand eines Halteelementes (86) des Anschlussgehäuseteils (36) erstreckt.

5. Elektromagnetventil für einen Verbrennungsmotor nach einem der vorhergehenden Ansprüche,
**dadurch gekennzeichnet, dass**
der radiale Abstand eines Endes des Hakens (88) zur Mittelachse des Ankers (30) kleiner ist als der Radius des Ankers (30).

6. Elektromagnetventil für einen Verbrennungsmotor nach einem der vorhergehenden Ansprüche,
**dadurch gekennzeichnet, dass**
der axiale Abstand des Hakens (88) vom Kern (18) mindestens so groß ist wie der Abstand des vom Kern (18) abgewandten axialen Endes des Ankers (30) in der Position, in der der Regelkörper (42) im eingebauten Zustand des Elektromagnetventils auf einem Ventilsitz aufliegt.

7. Elektromagnetventil für einen Verbrennungsmotor nach einem der vorhergehenden Ansprüche,
**dadurch gekennzeichnet, dass**
die axiale Höhe der Ausnehmung (76) mindestens so groß ist wie der Verstellweg des Ankers (30) im eingebauten Zustand des Elektromagnetventils summiert mit der axialen Ausdehnung des Hakens (88) und dem Abstand des Hakens (88) vom Anker (30) In der auf dem Ventilsitz aufliegenden Position des Regelkörpers (42).

8. Elektromagnetventil für einen Verbrennungsmotor nach einem der vorhergehenden Ansprüche,
**dadurch gekennzeichnet, dass**
der Regelkörper (42) einen inneren Hohlkörper (56) und einen daran befestigten im Wesentlichen zylindrischen Hohlkörper (54) aufweist und die Ausnehmung (76) an einem axialen Abschnitt (74) des inneren Hohlkörpers (56) ausgebildet ist.

9. Elektromagnetventil für einen Verbrennungsmotor nach einem der vorhergehenden Ansprüche,
**dadurch gekennzeichnet, dass**
drei gleichmäßig über den Umfang verteilte Haken (88) am Gehäuse (12, 36) ausgebildet sind.

10. Elektromagnetventil für einen Verbrennungsmotor nach Anspruch 9,
**dadurch gekennzeichnet, dass**
die drei Haken (88) und deren Halteelemente (86) gleichmäßig über den Umfang verteilt in Zwischenräumen von ringsegmentförmigen Vorsprüngen, die als Führungsabschnitt (84) einer Feder (82) dienen, angeordnet sind.

11. Elektromagnetventil für einen Verbrennungsmotor nach einem der vorhergehenden Ansprüche,
**dadurch gekennzeichnet, dass**
der mindestens eine Haken (88) am axialen Ende eines Führungsabschnitts (84) für eine Feder (82) ausgebildet ist.

## Claims

1. An electromagnetic valve for an internal combustion engine, the electromagnetic valve comprising:
a housing (12, 36),
an electromagnetic actuator (10) arranged in the housing (12, 36),
a control element (42) which is arranged to protrude axially out of the housing (12, 36) and which is connected to and movable with the armature (30) of the actuator (10) and forms a movable unit together with the armature (44),
means configured to axially delimit an axial movement of the movable unit (44) directed away from a core (18) of the actuator (10)
**characterized in that**
said means configured to delimit the axial movement of the movable unit (44) are formed by at least one hook (88) arranged on the housing (12, 36), the hook being configured to engage into a radial recess (76) of the movable unit (44), the radial recess being configured to extend in the control element (42) at the axial end of the armature (30) averted from the core (18).

2. The electromagnetic valve for an internal combustion engine as recited in claim 1, **characterized in that** the at least one hook (88) is formed integrally with the housing part (36) of the housing (12, 36)

3. The electromagnetic valve for an internal combustion engine as recited in one of claims 1 or 2, **characterized in that** the housing (12, 36) comprises an actuator housing part (12) and a connection housing part (36), and the at least one hook (88) is formed on the connection housing part (36).

4. The electromagnetic valve for an internal combustion engine as recited in claim 3, **characterized in that** the hook (88) is configured to extend from the radial inner edge of a retaining element (86) of the connecting housing part (36).

5. The electromagnetic valve for an internal combustion engine as recited in one of the preceding claims, **characterized in that** the radial distance of an end of the hook (88) from the center axis of the armature (30) is smaller than the radius of the armature (30).

6. The electromagnetic valve for an internal combustion engine as recited in one of the preceding claims, **characterized in that** an axial distance of the hook (88) from the core (18) is at least as large as a distance of the axial end of the armature (30) averted from the core (18) in a position in which the control element (42) rests on a valve seat in the assembled state of the electromagnetic valve.

7. The electromagnetic valve for an internal combustion engine as recited in one of the preceding claims, **characterized in that** the axial height of the recess (76) is at least as large as the displacement path of the armature (30) when the electromagnetic valve is installed, added to the axial dimension of the hook (88) and added to a distance of the hook (88) from the armature (30) when the control element (42) is in a position resting on the valve seat.

8. The electromagnetic valve for an internal combustion engine as recited in one of the preceding claims, **characterized in that** the control element (42) comprises an inner hollow body (56) and a substantially cylindrical hollow body (54) fastened thereto, and the recess (76) is formed in an axial section (74) of the inner hollow body (56).

9. The electromagnetic valve for an internal combustion engine as recited in one of the preceding claims, **characterized in that** three hooks (88) are each formed on the housing (12, 36) and are evenly distributed over the circumference thereof.

10. The electromagnetic valve for an internal combustion engine as recited in claim 9, **characterized in that** the three hooks (88) and their retaining elements (86) are arranged evenly distributed over the circumference in gaps of ring segment-shaped protrusions that serve as guiding sections (84) of a spring (82).

11. The electromagnetic valve for an internal combustion engine as recited in one of the preceding claims, **characterized in that** the at least one hook (88) is formed at the axial end of a guiding section (84) for a spring (82).

## Revendications

1. Soupape électromagnétique pour moteur à combustion interne, avec
un carter (12, 36),
un actionneur électromagnétique (10) disposé dans le carter (12, 36),
un corps de réglage (42) saillant axialement du carter (12, 36) et relié à et mobil avec l'armature (30) de l'actionneur (10) et forme une unité de mouvement (44) avec l'armature (30),
moyens axialement limitant un mouvement axial de l'unité de mouvement (44) orienté au loin d'un noyau (18) de l'actionneur (10),
**caractérisée en ce que**
les moyens pour limiter le mouvement axial de l'unité de mouvement (44) sont formés par au moins un crochet (88) disposé sur le carter (12, 36), le crochet engageant un évidement (76) radial de l'unité de mouvement (44), qui s'étend au corps de réglage (42) à partir de l'extrémité axiale de l'armature (30) détournée du noyau (18).

2. Soupape électromagnétique pour moteur à combustion interne selon la revendication 1, **caractérisée en ce que** ledit au moins un crochet (88) est formé d'un seul tenant avec une partie (36) du carter (12, 36).

3. Soupape électromagnétique pour moteur à combustion interne selon l'une des revendications 1 ou 2, **caractérisée en ce que** le carter (12, 36) comprend une partie de carter actionneur (12) et une partie de carter connecteur (36), ledit crochet (88) étant formé sur la partie de carter connecteur (36).

4. Soupape électromagnétique pour moteur à combustion interne selon la revendication 3, **caractérisée en ce que** le crochet (88) s'étend du bord radialement intérieur d'un élément de retenu (86) partie de carter actionneur (12).

5. Soupape électromagnétique pour moteur à combustion interne selon l'une quelconque des revendications précédentes, **caractérisée en ce que** la distance radiale d'une extrémité du crochet (88) à l'axe central de l'armature (30) est inférieure au rayon de l'armature (30).

6. Soupape électromagnétique pour moteur à combustion interne selon l'une quelconque des revendications précédentes, **caractérisée en ce que** la distance axiale du crochet (88) du noyau (18) est au moins égale à la distance de l'extrémité axiale de l'armature (30) détournée du noyau (18) dans la position, dans laquelle le corps de réglage (42) s'appuie sur un siège de soupape quand la soupape électromagnétique est à l'état monté.

7. Soupape électromagnétique pour moteur à combustion interne selon l'une quelconque des revendications précédentes, **caractérisée en ce que** la hauteur axiale de l'évidement (76) est au moins égale à la course de l'armature (30) à l'état monté de la soupape électromagnétique additionnée à la dimension axiale du crochet (88) et la distance du crochet (88) de l'armature (30) dans la position du corps de réglage (42) en appui sur la siège de soupape.

8. Soupape électromagnétique pour moteur à combustion interne selon l'une quelconque des revendications précédentes, **caractérisée en ce que** le corps de réglage (42) comprend un corps creux interne (56) et un corps creux (54) essentiellement cylindrique monté à celui-ci, et l'évidement (75) est formé dans une section axiale (74) du corps creux interne (56).

9. Soupape électromagnétique pour moteur à combustion interne selon l'une quelconque des revendications précédentes, **caractérisée en ce que** trois crochets (88) reparti de manière uniforme sur la circonférence sont formés sur le carter (12, 36).

10. Soupape électromagnétique pour moteur à combustion interne selon la revendication 9, **caractérisée en ce que** les trois crochets (88) et leurs éléments de retenu (86) sont disposés reparti de manière uniforme dans des interstices entre saillies en forme de segment d'anneau, les saillies servant comme section de guidage (84) d'un ressort (82).

11. Soupape électromagnétique pour moteur à combustion interne selon l'une quelconque des revendications précédentes, **caractérisée en ce que** ledit au moins un crochet (88) est formé à l'extrémité axiale d'une section de guidage (64) pour un ressort (82).
